# EUROPEAN PATENT SPECIFICATION

(11) **EP 3 703 496 B1**
(45) Date of publication and mention of the grant of the patent: **15.09.2021**
(21) Application number: 18793436.9
(22) Date of filing: 02.11.2018
(51) Int. Cl.: A01N 25/08, A01N 25/24, A01N 37/18, A01N 47/16, A01N 37/46, A01N 37/08

(54) **PEST REPELLENT POLYMER COMPOSITIONS**
SCHÄDLINGSABWEHRENDE POLYMERZUSAMMENSETZUNGEN
COMPOSITIONS POLYMÈRES INSECTIFUGES

(30) Priority: 03.11.2017 EP 17199911
(43) Date of publication of application: 09.09.2020
(73) Proprietor: Clariant Plastics & Coatings Ltd, 4132 Muttenz (CH)
(72) Inventor: HEDAOO, Rahul Kishore, Kalyan (W) Maharashtra 421301 (IN); ACHINTYA KUMAR, Sen, Thane Maharashtra 400607 (IN)
(74) Representative: Appleyard Lees IP LLP
(86) International application number: PCT/EP2018/080008
(87) International publication number: WO 2019/086604

(56) References cited:
- WO-A2-2008/004711
- WO-A2-2008/032842
- RO-B- 84 303
- US-A1- 2012 213 836
- US-A1- 2013 172 436
- DATABASE WPI Week 199735 Thomson Scientific, London, GB; AN 1997-381255 XP002777589, -& JP 3 850494 B2 (ASAHI KASEI KK) 29 November 2006 (2006-11-29)
- DATABASE WPI Week 201529 Thomson Scientific, London, GB; AN 2015-244473 XP002777590, -& JP 2015 071548 A (HIRAOKA SHOKUSEN KK) 16 April 2015 (2015-04-16)
- DATABASE WPI Week 201618 Thomson Scientific, London, GB; AN 2016-127865 XP002777591, -& KR 101 628 916 B1 (KOREA INST IND TECHNOLOGY) 10 June 2016 (2016-06-10)
- D.M. NEVSKAIA ET AL: "Adsorption of Polyoxyethylenic Nonionic and Anionic Surfactants from Aqueous Solution: Effects Induced by the Addition of NaCl and CaCl2", JOURNAL OF COLLOID AND INTERFACE SCIENCE, vol. 205, no. 1, 1 September 1998 (1998-09-01), pages 97-105, XP055444273, US ISSN: 0021-9797, DOI: 10.1006/jcis.1998.5617

## Description

The present invention relate to pest repellent polymer compositions comprising a thermoplastic polymer and a silica carrier dispersed in the thermoplastic polymer. The silica carrier includes pest repellent actives.

It is well known that actives can be integrated in polymer matrix in order to provide desired functionality. However, controlled release of the actives from a polymer is important for long-lasting performance. For example, a release that is too rapid exhausts the polymer quickly of the actives while a too slow release does not have the desired efficiency.

Long lasting insecticidal nets (LLINs) have been proved to be effective against the reduction of mosquito populations and malaria incidence. For LLIN, the insecticidal or pest repellent dose on the surface of the net material should be sufficiently high for killing and/or repelling insects. Secondly, the release should last for years and sustain through multiple washing cycles. The overall content of the insecticide and/or pest repelling agent should be low in order to minimize the potential exposure of an end-user to the active ingredients. The largest markets for LLIN are regions with low income so cost is an aspect that needs to be considered while developing technologies.

US-2009/0041820 discloses functional polymer compositions including at least 50 wt.-% of one or more polymer components; 0.1 to 50 wt.-% of one or more fluids; and from 1 to 50 wt.-% of one or more active substrates. The active substrates include pest repellent actives. The fluid components of US-2009/0041820 are those that impart special functionality and/or assist with transport of one or more active substrates to the polymer matrix surface.

WO-2011040252 discloses pest repellent resin compositions including N,N-Diethyl-3-methylbenzamide, wherein the pest repellent active is supported on a specific layered silicate.

CN-1709957 discloses a fly-repellant plastic cap. The bottle cap contains fly-repellent active, an adsorbent and a thermoplastic resin. The adsorbent includes silica.

DATABASE WPI Week 201618 Thomson Scientific, London, GB; AN 2016-127865, discloses a moth repellent composition which is prepared by absorbing a solution of a repellent insecticide on silica particles which may be incorporated into masterbatches of polymers using a screw extruder.

There exists a need for developing pest-repellent polymer compositions that exhibit long-lasting performance compared to existing solutions and at same time remain cost-effective. The present invention provides a polymer composition as described in claim 1. The inventive polymer compositions provide long-lasting performance and is effective in repelling pests.

As used herein, the term "long lasting" means more than 6 months, preferably more than one year.

As used herein, the term "pests" refer to mosquitoes, ticks, cockroaches, bed bugs, mites, fleas, lice, leeches, houseflies, termites, ants, moths, spiders, grasshoppers, crickets, black fly and silverfish.

Preferred thermoplastic polymers include polyamides, polystyrenes, polyvinyl chlorides polyolefins or any copolymers thereof. Example polyolefins include polyethylene (PE), preferably selected from the group consisting of high density polyethylene (HDPE), medium density polyethylene (MDPE), low density polyethylene (LDPE), linear low density polyethylene (LLDPE), metallocene low density polyethylene (mLDPE) and metallocene linear low density polyethylene (mLLDPE); polypropylene (PP), preferably selected from the group consisting of polypropylene homopolymer (PPH), polypropylene random copolymer (PP-R) and polypropylene block copolymers (PP-block-COPO); PE copolymers, preferably selected from the group consisting of ethylene-vinyl acetate copolymers (EVA), copolymers of ethylene and methyl acrylate (EMA), copolymers of ethylene and butyl acrylate (EBA), copolymers of ethylene and ethyl acrylate (EEA), and cycloolefin copolymers (COC), general purpose polystyrene (GPPS) and high impact polystyrene (HIPS).

The pest repellent composition includes the thermoplastic polymer in an amount of at least 50 % by weight, preferably at least 70 % by weight and more preferably at least 90 % by weight based on the total weight of the composition.

Preferred silica carriers include commercially available precipitated silica. The preferred silica carrier is hydrophilic in nature. In one embodiment, the silica carrier is a mixture of precipitated silica carriers having hydrophilic and hydrophobic properties. The precipitated silica is commercially prepared using a wet process. In the wet process, alkali silicate, preferably sodium silicate is precipitated out by adding an acid such as sulphuric acid. The precipitated silica is filtered, washed and dried. The preferred carrier has silica or silicon dioxide (SiO₂) content of at least 97 %. The precipitated silica has a macroporous pore structure which makes them especially suitable for liquid absorption. According to the International Union of Pure and Applied

Chemistry (IUPAC), a carrier is said to be macroporous if the average pore size is above 50 nanometers.

The precipitated silica carrier has an average particle size of not more than 50 micrometers (µm), preferably not more than 35 µm, and more preferably not more than 20 µm. The average particle size of the silica can be measured using Laser diffraction techniques (ISO 13320). The preferred silica is that upon absorption of an active remains free flowing, lump-free powder and exhibit less dusting making it attractive for further processing with a polymer using standard polymer processing techniques.

The pest repellent actives of the present invention includes N,N-Diethyl-3-methylbenzamide (DEET), 1-piperidinecarboxylic acid-2-(2-hydroxyethyl)-1-methylpropyl ester (Picaridin), 3-[N-Butyl-N-acetyl]-aminopropionic acid, ethyl ester, dimethyl carbate and any combinatons thereof. Other pest repellents include natural pest repellents such as essential oil of the lemon eucalyptus (Corymbia citriodora), nepetalactone, citronella oil, neem oil, extract of Bog Myrtle (Myrica Gale). In a preferred embodiment the pest repellent active is DEET. DEET may contain a substitution isomer such as a p-toluamide or one in which the N-ethyl group moiety is replaced by another alkyl group having 1 to 3 carbons. The pest repellent active of the invention exhibits excellent pest repellency towards mosquito, additionally it may repel ticks, termites, moths, spiders, grasshoppers, silverfish, crickets, house flies, ants, cockroaches, black fly, mites, lice, stable flies, bed bugs, fleas, trombiculid mites and land leech.

Additionally, an insecticide can be incorporated in the pest-repellent polymer compositions. Exemplary insecticide that can be used include pyrethroid family of insecticides, such as, permethrin, deltamethrin, cyfluthrin, cypermethrin, alpha-cypermethrin, beta-cypermethrin, etofenprox, lambda-cyhalothrin and combinations thereof. Other insecticides that may be used alone or in combinations include carbamate compounds such as, alanycarb, bendiocarb, carbaryl, isopropcarb, carbosulfan, fenoxycarb, indoxacarb, propoxur, pirimicarb, thiocarb, methomyl, ethiofencarb, cartap, xylylcarb, and pyrrole compound such as chlorfenapyr. Another group of insecticides such as organo phosphorus compounds may be utilized. Such compounds include fenitrothion, diazinon, pyridaphenthion, pirimiphos-ethyl, pirimiphos-methyl, etrimphos, fenthion, phoxim, chloropyrifos, cyanophos, pyraclofos, azamethiphos, malathion, temephos, dimethoate, formothion, and phenthoate.

The pest repellent active is mixed with silica carrier in presence of said surfactant to form pest repellent silica carriers. Exemplary non-ionic surfactants include fatty alcohol polyglycol ethers, alkylphenol polyglycol ethers, fatty acid polyglycol esters, fatty amide polyglycol ethers, fatty amine polyglycol ethers, alkoxylated triglycerides, mixed ethers, alkenyl oligoglycosides, fatty acid N-alkylglucamides, protein hydrolysates, polyol fatty acid esters, sugar esters, sorbitan esters, polysorbates, amine oxides and any combinations thereof. Non-limiting examples of non-ionic surfactants include sorbitan monostearate, polyoxyethylene ester of rosin, polyoxyethylene dodecyl mono ether, polyoxyethylene-polyoxypropylene block copolymer, polyoxyethylene monolaurate, polyoxyethylene monohexadecyl ether, polyoxyethylene monooleate, polyoxyethylene mono(cis-9-octadecenyl)ether, polyoxyethylene monostearate, polyoxyethylene monooctadecyl ether, polyoxyethylene dioleate, polyoxyethylene distearate, polyoxyethylene sorbitan monolaurate polyoxyethylene sorbitan monooleate, polyoxyethylene sorbitan monopalmitate, polyoxyethylene sorbitan monostearate, polyoxyethylene sorbitan trioleate, polyoxyethylene sorbitan tristearate, polyglycerol ester of oleic acid, polyoxyethylene sorbitol hexastearate, polyoxyethylene monotetradecyl ether, polyoxyethylene sorbitol hexaoleate, fatty acids, tall-oil, sorbitol hexaesters, castor oil ethoxylates, soybean oil ethoxylates, rapeseed oil ethoxylates, ethoxylated fatty acids, ethoxylated fatty alcohols, ethoxylated polyoxyethylene sorbitol tetraoleate, glycerol and polyethylene glycol mixed esters, alcohols, polyglycerol esters, monoglycerides, sucrose esters, alkyl polyglycosides, polysorbates, fatty alkanolamides, polyglycol ethers, derivatives of any thereof, and combinations of any thereof. In a preferred embodiment, the non-ionic surfactant is a castor oil ethoxylate. The castor oil ethoxylate may have an average degree of ethoxylation from 2 to 50, preferably from 10 to 45 and more preferably from 20 to 40. The average degree of ethoxylation is defined as the number of moles of ethylene oxide required per mole of oil.

Inventors have surprisingly discovered that when absorption of the pest repellent active on silica carrier is carried out in presence of said surfactant, the retention of active is enhanced when compared to absorption of active on silica carrier without the surfactant. This is especially true for volatile actives such as DEET. The enhanced retention of the active on silica carrier is manifested in longer lasting release of the active from pest-repellent compositions.

The pest repellent silica carrier can include actives in amounts of 0.1 % to 50 % by weight, more preferably 10 % to 40 % by weight based on the total weight of pest repellent silica carrier. The mixing of the silica carrier, pest repellent active and surfactant is preferably carried out at room temperature. Although mixing at temperatures above room temperature but below degradation temperature of the pest repellent active can be envisioned. The mixing time is preferably from 5 seconds to 36 hours, preferably 5 seconds to 24 hours.

The pest repellent polymeric composition of the present invention is prepared by dispersing the pest repellent silica carrier in the thermoplastic polymer. The pest repellent silica carrier is added in powder form to, for example, polyethylene or polypropylene pellets or mixtures of these. The resulting mixture is then melt extruded, by the application of heat, from an extruder in the form of thin strips. The extruded material is then cut into small lengths and finally formed into small pellets to form pest repellent pellets. The weight of the pest repellent pellets obtained after the heat-melting step is not significantly different from the combined weight of pest repellent silica carrier and the polymer material prior to the heat-melting which shows that the volatile pest repellent active is well-protected and retained in the composition. The concentrated pest repellent pellets are also otherwise known as pest repellent masterbatches.

The pest repellent masterbatches may contain pest-repellent actives up to 25 % by weight, preferably from 0.1 % to 20 % by weight, more preferably from 1 % to 16 % by weight based on the total weight of pest repellent masterbatches.

The pest repellent masterbatches may also include other additives to improve or enhance the function, or processing or effect substances. Non-limiting examples of additives include UV absorbers, fragrance, light stabilizers based on sterically hindered amines, flame retardants, quenchers, antioxidants, pigments, acid scavengers, fillers, ignition resistant additives, antioxidants, photostabilizers, coloring substances, antistatic agents, dispersing agents, mold-release agents, copper inhibitors, nucleating agents, plasticizers, lubricants, emulsifiers, optical brighteners, rheology additives, catalysts, flow-control agents, slip agents, crosslinking agents, crosslinking boosters, halogen scavengers, smoke inhibitors, clarifiers or blowing agents.

The pest repellent master batches are then further processed with a second polymer to form an article of desired color, shape or form. The article can be a molded article or an extruded article. As a molding method, conventional method such as extrusion molding, injection molding, blow molding, calender molding, and compression molding is employed to obtain a molded product having the desired shape. The second polymer is a thermoplastic polymer as discussed previously.

In one embodiment, the pest repellent masterbatches are blended with a polyolefin such as polypropylene or high density polyethylene, and used to produce a film, filament, fiber, sheet, thermo-formed or injection-molded article, woven or non-woven material, yarn, or netting such as a mosquito net. In one embodiment, the invention provides a fiber having pest repellency. The fibers can be made according to methods known in the art. The fibers may have desirable softness and physico-mechanical properties and may be used in various applications, for example, continuous filament yarn, bulked continuous filament yarn, staple fibers, melt blown fibers, and spun bound fibers. In one embodiment, the invention provides fabrics made with the fibers of the invention. The fabrics may be made by any of the known processes for making non-woven or woven fabrics.

A particular advantage of the present invention is the retention of the pest repellent active through two drastic heating cycles involved in manufacture of a woven fabric, for example a mosquito net. It is believed, that the pest repellent active is well-protected within the pores of the silica carrier which is again aided by the presence of the non-ionic surfactant. The net can include an active content depending on the safe and recommended dosage of the desired active. In one embodiment, a net incorporating the pest repellent composition may have an active content of up to 2 % by weight, preferably from 0.1 to 1.5 % and more preferably from 0.5 to 1 % by weight based on the total weight of the net.

Although, the primary purpose of the invention is to protect against mosquitoes, it also includes control and/or to combat a variety of pests, such as ticks, cockroaches, bed bugs, mites, fleas, lice, leeches, houseflies, termites, ants, moths, spiders, grasshoppers, crickets, silverfish, and other flying and crawling insects. In addition to mosquito nets, other applications include nets or fabrics used in agriculture, such as fences, animal enclosures, greenhouse nets, or crop enclosures, especially for fruits or vegetables hanging on trees or bushes; examples are cocoa pods or banana. Other examples include bedclothes, mattresses, pillows, duvets, cushions, curtains, wall coverings, carpeting and window, cupboard and door screens, geotextiles, tents, inner soles of shoes, garments, such as socks, trousers, shirts, uniforms, horse blankets, pet collars and beddings, covering in agriculture and viniculture; fabrics or nettings for packages, wrapping sacks, outdoor gears; containers for food, seeds and feed; construction materials, furniture. The typical amount of pest repellent active in these applications can be between 0.001 and 5 % of the weight of the fabric or netting dependent on the insecticidal efficacy of the pest repellent active.

Without further elaboration, it is believed that one skilled in the art can, using the description herein, utilize the present invention to its fullest extent. The following examples are included to provide additional guidance to those skilled in the art in practicing the claimed invention. The examples provided are merely representative of the work that contributes to the teaching of the present application. Accordingly, the examples are not intended to limit the invention, as defined in the appended claims, in any manner.

### Examples

### Comparative Example 1

Preparation of pest repellent silica carriers: Pest repellent silica carriers were prepared by mixing DEET and precipitated silica (Sipernat 22 S from Evonik Industries) in grams (g) in varying proportions, as shown in Table 1. The prepared Samples 1a and 1b were kept in an oven at 105 ±1 °C for 5 days and the weight of the samples were measured at the end of this period. Sample 1a lost about 3.6 % by weight and Sample 1b lost about 9.9 % by weight, respectively indicative of the loss of volatile DEET from pest repellent silica carriers.

**Table 1: Composition of pest repellent silica carriers**

| | 1a | 1b |
|---|---|---|
| DEET (g) | 10 | 40 |
| Silica (g) | 90 | 60 |
| approximate weight loss (%) | 3.6 | 9.9 |

### Comparative Example 2

Preparation of pest repellant master batches: About 40 grams (g) of the pest repellent silica carrier Sample 1b of Comparative Example 1 was melt extruded with 40 g LDPE powder (HD50MA180), 0.5 g Wax PE 520, 0.1 g Mineral oil and 19.4 g HDPE granules to form pest repellent master batch Sample 2. The prepared Sample 2 was kept in an oven at 105 ± 1 °C for 5 days and the weight was measured at the end of this period. The approximate weight loss of the Sample 2 was found to be 8.7 %.

### Example 1

Preparation of pest repellent silica carrier: Three Samples, 3a, 3b and 3c respectively, were prepared containing varying amounts of DEET, castor oil ethoxylate and silica as shown in Table 2. First, DEET was mixed with castor oil ethoxylate (Emulsogen 360 EL from Clariant International) and the resulting DEET solutions were absorbed on precipitated silica carrier (Sipernat 22 S from Evonik Industries) to form pest repellent silica carrier Samples 3a, 3b and 3c, respectively. The pest repellent silica carrier samples thus prepared were free flowing, lump-free powder and were of less dusting. The prepared samples were kept in an oven at 105 ± 1 °C for 5 days and the approximate percentage weight loss of these samples were measured at the end of this period. The weight loss of the Sample 3a was found to be about 2.6 %. In comparison, Sample 1a of Comparative Example 1 had a percentage weight loss of about 3.6 %. This Example demonstrates that the weight loss has been reduced by absorption of DEET in presence of castor oil ethoxylate. By increasing the amount of surfactant from Sample 3b to Sample 3c the weight loss has been further reduced thus demonstrating the enhanced retention of DEET when absorbed on silica carrier in presence of the surfactant.

**Table 2: Composition of pest repellent silica carriers**

| | 3a | 3b | 3c |
|---|---|---|---|
| DEET (g) | 10 | 40 | 40 |
| Silica (g) | 89 | 59 | 55 |
| castor oil ethoxylate (g) | 1 | 1 | 5 |
| approx. weight loss (%) | 2.6 | 7.2 | 3.2 |

### Example 2

Preparation of pest repellant master batches: About 40 g of the pest repellent silica carrier Sample 3c of Example 1 was melt extruded with 40 g LDPE powder (HD50MA180), 0.5 g Wax PE 520, 0.1 g Mineral oil and 19.4 g HDPE granules to form pest repellent master batch Sample 4. The prepared Sample 4 was kept in an oven at 105 ± 1 °C for 5 days and the weight was measured at the end of this period. The approximate weight loss of the Sample 4 was found to be 2.8 %. In comparison, Sample 2 of Comparative Example 2 had a weight loss of about 8.7 %. This Example demonstrates that absorption of DEET in presence of castor oil ethoxylate has enhanced retention of DEET in master batch by about 32 %.

Quantification of DEET in pest repellent master batch: About 5 g of Sample 4 was added to acetonitrile with sonication for 30 minutes at room temperature (30 °C). This was then refluxed for 3 - 4 hours at 80 °C. The sample was withdrawn from this solution and run on a HPLC Column (Eclipse XDB C18 150*4.6mm, 3.5 micron) using mobile phase of Acetonitrile: Methanol (90:10) (Isocratic system) at a flow rate of 0.5 mL/min. The HPLC quantified a DEET content of about 14.97 % by weight against the theoretical 16 % by weight indicating a loss of about 6.5 % during processing of master batch.

## Claims

1. A pest repellent polymer composition comprising:
at least 50% by weight based on the total weight of the composition a thermoplastic polymer; and
from 0.1 % to 50% by weight based on the total weight of the composition a precipitated silica carrier comprising a pest repellent active, wherein the active is absorbed on precipitated silica carrier in presence of a surfactant, wherein the surfactant comprises a non-ionic surfactant.

2. The polymer composition of claim 1, wherein the thermoplastic polymer comprises polyamides, polystyrenes, polyvinyl chlorides, polyolefins or any copolymers thereof.

3. The polymer composition of claim 1, wherein the active comprises N,N-Diethyl-3-methylbenzamide (DEET), 1-piperidinecarboxylic acid-2-(2-hydroxyethyl)-1-methylpropyl ester (Picaridin), 3-[N-Butyl-N-acetyl]-aminopropionic acid ethyl ester, dimethyl carbate or any combinatons thereof.

4. The polymer composition as claimed in any of the preceding claims, wherein the active is N,N-Diethyl-3-methylbenzamide and wherein the thermoplastic polymer is a polyolefin.

5. The polymer composition of claim 1, wherein the non-ionic surfactant is a castor oil ethoxylate.

6. The polymer composition as claimed in any of the preceding claims, wherein the active is present in an amount from about 0.1 percent by weight to about 25 percent by weight to the total weight of the polymer composition.

7. An article prepared from the composition as claimed in any of the preceding claims, wherein the article is a molded article, a film, a melt blown fabric, a spun bonded fabric, a non-woven fabric, a woven fabric or an extruded article.

8. The article of claim 7, wherein the woven fabric is a mosquito repellant net.

9. A pest repellent silica composition comprising:
a precipitated silica carrier, wherein the precipitated silica carrier has absorbed there on a pest repellent active and a surfactant, wherein the surfactant comprises a non-ionic surfactant.

10. Use of the pest repellent silica composition of claim 9 to form a pest repellent polymeric composition.

## Patentansprüche

1. Schädlingsabwehrende Polymerzusammensetzung, umfassend:
wenigstens 50 Gew.-%, bezogen auf das Gesamtgewicht der Zusammensetzung, an einem thermoplastischen Polymer; und von 0,1 Gew.-% bis 50 Gew.-%, bezogen auf das Gesamtgewicht der Zusammensetzung, an einem präzipitierten Siliciumdioxid-Träger, der einen schädlingsabwehrenden Wirkstoff umfasst, wobei der Wirkstoff auf dem präzipitierten Siliciumdioxid-Träger in Gegenwart eines Tensids absorbiert ist, wobei das Tensid ein nichtionisches Tensid umfasst.

2. Polymerzusammensetzung gemäß Anspruch 1, wobei das thermoplastische Polymer Polyamide, Polystyrole, Polyvinylchloride, Polyolefine oder beliebige Copolymere davon umfasst.

3. Polymerzusammensetzung gemäß Anspruch 1, wobei der Wirkstoff N,N-Diethyl-3-methylbenzamid (DEET), 1-Piperidincarbonsäure-2-(2-hydroxyethyl)-1-methylpropylester (Picaridin), 3-[N-Butyl-N-acetyl]aminopropionsäureethylester, Dimethylcarbat oder beliebige Kombinationen davon umfasst.

4. Polymerzusammensetzung gemäß einem der vorstehenden Ansprüche, wobei der Wirkstoff N,N-Diethyl-3-methylbenzamid ist und wobei das thermoplastische Polymer ein Polyolefin ist.

5. Polymerzusammensetzung gemäß Anspruch 1, wobei das nichtionische Tensid ein Castoröl-Ethoxylat ist.

6. Polymerzusammensetzung gemäß einem der vorstehenden Ansprüche, wobei der Wirkstoff in einer Menge von etwa 0,1 Gewichtsprozent bis etwa 25 Gewichtsprozent, bezogen auf das Gesamtgewicht der Polymerzusammensetzung, vorhanden ist.

7. Gegenstand, hergestellt aus der Zusammensetzung gemäß einem der vorstehenden Ansprüche, wobei der Gegenstand ein Formkörper, ein Film, ein schmelzgeblasener Stoff, ein Spinnvlies, ein Vliesstoff, ein gewebter Stoff oder ein extrudierter Gegenstand ist.

8. Gegenstand gemäß Anspruch 7, wobei der gewebte Stoff ein Moskitoabwehrnetz ist.

9. Schädlingsabwehrende Siliciumdioxidzusammensetzung, umfassend:
einen präzipitierten Siliciumdioxid-Träger, wobei der präzipitierte Siliciumdioxid-Träger einen schädlingsabwehrenden Wirkstoff und ein Tensid darauf absorbiert aufweist, wobei das Tensid ein nichtionisches Tensid umfasst.

10. Verwendung der schädlingsabwehrenden Siliciumdioxidzusammensetzung gemäß Anspruch 9 zur Herstellung einer schädlingsabwehrenden Polymerzusammensetzung.

## Revendications

1. Composition de polymère répulsif pour organismes nuisibles comprenant :
au moins 50 % en poids, sur la base du poids total de la composition, d'un polymère thermoplastique ; et
de 0,1 % à 50 % poids, sur la base du poids total de la composition, d'un support de silice précipitée comprenant un agent actif répulsif pour organismes nuisibles, l'agent actif étant absorbé sur le support de silice précipitée en présence d'un tensioactif, le tensioactif comprenant un tensioactif non ionique.

2. Composition de polymère selon la revendication 1, le polymère thermoplastique comprenant des polyamides, des polystyrènes, des poly(chlorure de vinyle), des polyoléfines ou de quelconques copolymères correspondants.

3. Composition de polymère selon la revendication 1, l'agent actif comprenant du N,N-Diéthyl-3-méthylbenzamide (DEET), de l'ester de 2-(2-hydroxyéthyl)-1-méthylpropyle d'acide 1-pipéridinecarboxylique (Picaridin), de l'ester d'éthyle d'acide 3-[N-Butyl-N-acétyl]-aminopropionique, du diméthyl carbate ou de quelconques combinaisons correspondantes.

4. Composition de polymère selon l'une quelconque des revendications précédentes, l'agent actif étant le N,N-Diéthyl-3-méthylbenzamide et le polymère thermoplastique étant une polyoléfine.

5. Composition de polymère selon la revendication 1, le tensioactif non ionique étant un éthoxylate d'huile de ricin.

6. Composition de polymère selon l'une quelconque des revendications précédentes, l'agent actif étant présent en une quantité d'environ 0,1 pour cent en poids à environ 25 pour cent en poids du poids total de la composition de polymère.

7. Article préparé à partir de la composition selon l'une quelconque des revendications précédentes, l'article étant un article moulé, un film, un tissu soufflé fondu, un tissu filé lié, un tissu non tissé, un tissu tissé ou un article extrudé.

8. Article selon la revendication 7, le tissu tissé étant un filet répulsif pour moustiques.

9. Composition de silice répulsive pour organismes nuisibles comprenant :
un support de silice précipitée, le support de silice précipitée ayant, absorbé sur celui-ci, un agent actif répulsif pour organismes nuisibles et un tensioactif,
le tensioactif comprenant un tensioactif non ionique.

10. Utilisation de la composition de silice répulsive pour organismes nuisibles selon la revendication 9 pour former une composition polymérique répulsive pour organismes nuisibles.
